# FASCICULE DE BREVET EUROPEEN

(11) **EP 3 685 031 B1**
(45) Date de publication et mention de la délivrance du brevet: **13.04.2022**
(21) Numéro de dépôt: 18769759.4
(22) Date de dépôt: 27.08.2018
(51) Int. Cl.: F02D 41/02, F02D 41/08, F02D 41/14, F02D 37/02, F01N 3/023, F01N 9/00

(54) **PROCEDE DE REGENERATION D'UN FILTRE A PARTICULES DE MOTEUR THERMIQUE**
VERFAHREN ZUR REGENERIERUNG EINES PARTIKELFILTERS FÜR EINE WÄRMEKRAFTMASCHINE
METHOD FOR REGENERATING A PARTICULATE FILTER FOR A HEAT ENGINE

(30) Priorité: 19.09.2017 FR 1758678
(43) Date de publication de la demande: 29.07.2020
(73) Titulaire: PSA Automobiles SA, 78300 Poissy (FR)
(72) Inventeur: FOLLIOT, Pascal, 78280 GUYANCOURT (FR); LAIGLE, Emmanuel, 92400 COURBEVOIE (FR)
(86) Numéro de dépôt international: PCT/FR2018/052107
(87) Numéro de publication internationale: WO 2019/058040

(56) Documents cités:
- EP-A1- 1 582 714
- EP-A1- 1 980 725
- EP-A1- 3 213 950
- FR-A1- 2 878 903

## Description

L'invention porte sur un procédé de régénération d'un filtre à particules de moteur thermique. L'invention se situe dans le domaine de la dépollution des gaz d'échappement d'un moteur thermique.

Lors de la combustion d'un mélange d'air et de carburant dans un moteur thermique, des polluants sont émis dans la ligne d'échappement du moteur. Ces polluants sont principalement des hydrocarbures imbrûlés (HC), des oxydes d'azote (monoxyde d'azote NO et dioxyde d'azote NO₂) et des oxydes de carbone (dont le monoxyde de carbone CO).

Les normes environnementales en matière de dépollution des gaz d'échappement imposent l'installation de systèmes de post-traitement des gaz d'échappement dans la ligne d'échappement des moteurs. La ligne d'échappement d'un moteur est donc généralement au moins munie d'un catalyseur, par exemple un catalyseur à trois voies, permettant la réduction des oxydes d'azote en azote et en dioxyde de carbone, l'oxydation des monoxydes de carbone en dioxyde de carbone, et l'oxydation des hydrocarbures imbrûlés en dioxyde de carbone et en eau.

Des particules solides ou liquides constituées essentiellement de suies à base de carbone, et/ou de gouttelettes d'huile peuvent également être émises. Ces particules ont typiquement une taille comprise entre quelques nanomètres et un micromètre. Pour les piéger, on prévoit généralement un filtre à particules constitué d'une matrice minérale, de type céramique, de structure alvéolaire, définissant des canaux disposés sensiblement parallèlement à la direction générale d'écoulement des gaz d'échappement dans le filtre, et alternativement obturés du côté de la face d'entrée des gaz du filtre et du côté de la face de sortie des gaz du filtre, comme cela est décrit dans le document EP2426326.

Le filtre à particules nécessite des régénérations régulières pour ne pas être surchargé en suies. Ces régénérations ont lieu en présence de thermique et d'oxygène. Pour un moteur à essence, une zone importante de fonctionnement moteur permet d'apporter la thermique nécessaire et l'oxygène peut être apporté par des coupures d'injection lors d'un relâchement de l'accélérateur, ou lors des passages de rapport. Ces régénérations peuvent se faire lors d'une maintenance, comme l'illustre le document EP1582714A1.

Dans certains cas, il est possible que ces conditions ne soient pas réunies, soit du fait d'un profil de roulage à trop basses vitesses ne permettant pas d'atteindre la thermique nécessaire à la régénération du filtre à particules, soit du fait de la multiplicité des roulages courts, générant des émissions de particules supérieures à la capacité de régénération (dans le temps durant lequel les conditions sont réunies).

Pour ces profils de roulage, une stratégie de régénération forcée du filtre à particules peut être mise en place. Toutefois, cette régénération qui doit être réalisée lors de trajets à partir d'une certaine charge en suies du filtre à particules peut s'avérer inefficace, notamment pour des températures à l'échappement trop basses et/ou des trajets trop courts.

Dans le cas où ces conditions critiques se maintiennent trop longtemps, le chargement du filtre à particules peut atteindre un seuil critique au-delà duquel toute régénération en mode de fonctionnement dynamique du véhicule pourrait être dangereuse. Dans ce cas de figure, la puissance du moteur est volontairement abaissée et le conducteur est invité à faire réparer son véhicule.

L'invention vise à permettre la réalisation, en mode stationnaire du véhicule, d'une régénération dite "contrôlée" du filtre à particules dans le cadre d'une opération de maintenance.

A cet effet, l'invention a pour objet un procédé de régénération en mode stationnaire d'un filtre à particules de moteur thermique chargé en suies lors d'une opération de maintenance, le moteur thermique étant relié à une ligne d'échappement comportant le filtre à particules, caractérisé en ce que ledit procédé comporte:
- une étape d'augmentation d'un régime moteur depuis un régime de ralenti vers un régime optimal compris entre 3000 tr/min et 4000 tr/min permettant d'augmenter une température des gaz d'échappement ainsi qu'un débit des gaz d'échappement,
- une étape de régénération du filtre à particules basée sur une adaptation de paramètres de fonctionnement du moteur thermique de manière à contrôler la température des gaz d'échappement en amont du filtre à particules dans une plage comprise entre 750°C et 800°C et un niveau d'oxygène dans le filtre à particules de l'ordre de 2% pour éviter un emballement d'une combustion des suies,
- une étape de refroidissement de la ligne d'échappement à la fin de l'étape de régénération du filtre à particules, et
- une étape de réalisation d'un bilan d'efficacité de la régénération du filtre à particules.

L'invention permet ainsi, grâce à l'apport maîtrisé de thermique et d'oxygène à l'échappement, de régénérer les suies stockées dans un filtre à particules surchargé sans risque sécuritaire pour le véhicule. L'invention présente également l'avantage de pouvoir être aisément mise en œuvre sur un véhicule à l'arrêt grâce à un automate embarqué dans le calculateur moteur et piloté par les outils externes de service après-vente.

Selon une mise en œuvre, les paramètres de fonctionnement du moteur thermique adaptés lors de l'étape de régénération du filtre à particules sont les suivants: une avance à l'allumage qui est fortement retardée dans un cycle moteur pour obtenir la température souhaitée des gaz d'échappement ainsi qu'une consigne de richesse fixée par exemple à une valeur de l'ordre de 0,95 pour obtenir le taux d'oxygène souhaité.

Selon une mise en œuvre, au moins un paramètre supplémentaire de fonctionnement du moteur thermique adapté lors de l'étape de régénération du filtre à particules peut être choisi parmi: un ou plusieurs paramètres d'injection, une levée de soupapes et un croisement de soupapes si le moteur thermique est pourvu de système à levée de soupapes variable, de manière à maîtriser notamment une stabilité de combustion du moteur thermique.

Selon une mise en œuvre, l'étape de réalisation du bilan d'efficacité est effectuée à partir d'une mesure de pression différentielle entre une entrée et une sortie du filtre à particules, tout en maintenant un débit des gaz d'échappement permettant de réaliser une telle mesure.

Selon une mise en œuvre, le procédé comporte en outre une étape d'apprentissage consistant à maintenir un régime moteur permettant d'effectuer un apprentissage d'un estimateur de charge en suies du filtre à particules basé sur une mesure de pression différentielle.

L'invention a également pour objet un outil de pilotage d'une régénération d'un filtre à particules comportant une mémoire stockant des instructions logicielles pour la mise en œuvre du procédé de régénération du filtre à particules tel que précédemment défini.

L'invention sera mieux comprise à la lecture de la description qui suit et à l'examen des figures qui l'accompagnent. Ces figures ne sont données qu'à titre illustratif mais nullement limitatif de l'invention.

La figure 1 est une représentation schématique d'un moteur thermique avec lequel est mis en œuvre le procédé de régénération d'un filtre à particules selon la présente invention;

La figure 2 est un diagramme temporel des différentes phases du procédé de régénération du filtre à particules selon la présente invention.

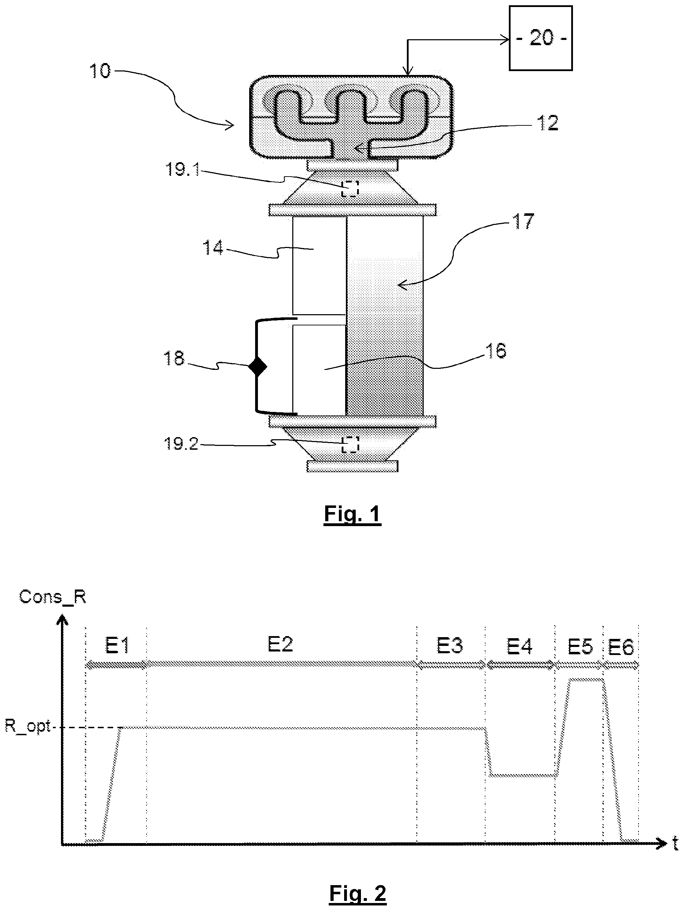

La figure 1 représente un moteur thermique 10, par exemple un moteur à essence à allumage commandé, notamment destiné à équiper un véhicule automobile.

Le moteur thermique 10 est relié à une ligne d'échappement 12 pour l'évacuation des gaz brûlés produits par le fonctionnement du moteur thermique 10.

La ligne d'échappement 12 comprend un organe 14 de dépollution de polluant gazeux, par exemple un catalyseur d'oxydation, ou un catalyseur trois-voies. Le catalyseur trois voies 14 permet notamment de réduire les oxydes d'azote en azote et en dioxyde de carbone, d'oxyder les monoxydes de carbone en dioxyde de carbone, et les hydrocarbures imbrûlés en dioxyde de carbone et en eau.

La ligne d'échappement 12 comprend un filtre à particules 16 pour filtrer des particules de suies dans les gaz d'échappement du moteur thermique 10. Le filtre à particules 16 est adapté à la filtration de particules de suies provenant de la combustion d'essence (correspondant ainsi en anglais à un "gasoline particulate filter" abrégé en GPF), qui se différencie des filtres à particules classiques assurant une filtration des particules de suies issues de la combustion du gazole.

Dans le filtre à particules 16, les gaz d'échappement traversent la matière composant le filtre à particules 16. Ainsi, lorsque le filtre à particules 16 est formé de canaux, chacun de ces canaux comprend une extrémité bouchée, de sorte que les gaz d'échappement s'écoulant dans le filtre à particules 16 passent de canaux en canaux, en traversant les parois des différents canaux du filtre à particules 16 pour sortir du filtre à particules 16. Le filtre à particules 16 pourra être à base d'une matrice céramique poreuse, par exemple en cordiérite, mullite, titanate d'aluminium ou carbure de silicium. S'il y a lieu, l'organe 14 de dépollution et le filtre à particules 16 pourront être implantés à l'intérieur d'une même enveloppe 17.

La ligne d'échappement 12 est également munie d'un capteur 18 de mesure de pression différentielle entre l'entrée et la sortie du filtre à particules 16 à partir de laquelle il est possible de déduire une quantité de particules accumulées. A cet effet, on utilise une cartographie établissant une corrélation, en fonction du débit d'air admis, entre la mesure de variation de pression et la masse en particules dans le filtre à particules 16.

Des sondes 19.1, 19.2 sont positionnées respectivement en amont et en aval de l'enveloppe 17 pour permettre la mesure d'un niveau d'oxygène dans les gaz d'échappement.

Un outil de pilotage 20 d'une régénération du filtre à particules 16 est également prévu pour la mise en œuvre du procédé de régénération du filtre à particules 16. Cet outil de pilotage 20 comporte une mémoire stockant des instructions logicielles pour la mise en œuvre du procédé détaillé ci-après.

On décrit ci-après, en référence avec la figure 2 montrant l'évolution du régime de consigne du moteur Cons_R en fonction du temps, les différentes étapes du procédé de régénération du filtre à particules 16 selon l'invention.

Le véhicule étant à l'arrêt avec son moteur tournant et la boîte de vitesses au point mort (position "Park" ou "Neutre" pour une boîte de vitesses automatique (BVA)), le procédé consiste à piloter directement de manière autonome le moteur 10 via l'outil de pilotage 20 externe relié au calculateur moteur. Ce pilotage est découpé en plusieurs phases temporelles dont la phase principale consiste à apporter les conditions nécessaires à la régénération du filtre à particules 16 sans risque d'emballement de la combustion des suies.

Plus précisément, au cours d'une étape E1, l'outil 20 pilote une augmentation du régime moteur depuis un régime de ralenti vers un régime optimal R_opt ainsi qu'une stabilisation d'une température d'échappement. Le régime optimal R_opt permet d'augmenter la température et le débit des gaz d'échappement. Ce régime R_opt est choisi de façon à obtenir un bon compromis entre la température et le débit des gaz d'échappement ainsi que la nuisance sonore du moteur thermique 10 car le procédé est mis en œuvre par un opérateur dans un endroit fermé, tel qu'un garage. Ce régime optimal R_opt est calibrable et est avantageusement compris entre 3000 et 4000 tr/min. Ce régime optimal R_opt est de préférence de l'ordre de 3500 tr/min. L'étape E1 a par exemple une durée de l'ordre de 300 secondes.

Puis, une régénération du filtre à particules 16 visant à brûler les suies du filtre à particules 16 est pilotée au cours d'une étape E2. Cette régénération du filtre à particules 16 est basée sur une adaptation de paramètres de fonctionnement du moteur thermique 10 de manière à contrôler une température des gaz d'échappement et un niveau d'oxygène dans le filtre à particules 16 pour éviter un emballement d'une combustion des suies. L'étape E2 a par exemple une durée de l'ordre de 1400 secondes, soit environ 20 minutes.

Lors de cette étape E2 de régénération, les paramètres de fonctionnement du moteur 10 sont modifiés par rapport à un mode de fonctionnement classique de manière à obtenir une température des gaz d'échappement en amont du filtre à particules 16 maintenue dans une plage comprise entre 750°C et 800°C et un niveau d'oxygène de l'ordre de 2%. Par niveau d'oxygène "de l'ordre de 2%", on entend un niveau d'oxygène pouvant varier entre plus ou moins 10% autour de cette valeur. Le débit des gaz est également un paramètre qui peut être ajusté via le choix du régime moteur.

A cet effet, les paramètres de fonctionnement du moteur thermique 10 adaptés sont les suivants: une avance à l'allumage qui est fortement retardée dans un cycle moteur pour obtenir la température souhaitée des gaz d'échappement ainsi qu'une consigne de richesse fixée par exemple à une valeur de l'ordre de 0,95 pour obtenir le taux d'oxygène souhaité.

Il sera également possible d'agir sur au moins un autre paramètre supplémentaire de fonctionnement du moteur thermique 10, tels que le nombre, la répartition et le phasage des injections, une pression du rail d'injection, une levée de soupapes et un croisement de soupapes si le moteur 10 est pourvu de système à levée de soupapes variable, de manière à maîtriser notamment une stabilité de combustion du moteur 10 qui constitue la principale contrainte à ces niveaux d'avance à l'allumage et de richesses cibles. Ainsi, l'invention consiste entre autre à appliquer pendant l'étape E2, un mode de combustion spécifique embarquant l'ensemble ou au moins une partie de ces modifications de paramètres de fonctionnement du moteur thermique 10.

Un refroidissement de la ligne d'échappement 12 est réalisé au cours d'une étape E3. Cette étape de refroidissement E3 consiste à refroidir la ligne d'échappement 12 à la fin de l'étape E2 de régénération du filtre à particules 16. L'étape E3 a par exemple une durée de l'ordre de 150 secondes

Au cours d'une étape E4, un apprentissage est réalisé. Cette étape E4 consiste à maintenir un régime moteur permettant d'effectuer un apprentissage d'un estimateur de charge en suies du filtre à particules 16 basé sur une mesure de pression différentielle. L'outil de pilotage 20 désactive également le diagnostic de surcharge du filtre à particules 16 généré par le calculateur moteur. L'étape E4 a par exemple une durée de l'ordre de 150 secondes

Un bilan d'efficacité de la régénération du filtre à particules 16 est effectué au cours d'une étape E5. La réalisation du bilan d'efficacité est effectuée à partir d'une mesure de pression différentielle entre l'entrée et la sortie du filtre à particules 16, tout en maintenant un régime moteur permettant d'obtenir un débit des gaz d'échappement pour la réalisation d'une telle mesure. Ce débit des gaz d'échappement est par exemple compris entre 0,010 m³/s et 0,020 m³/s, et vaut de préférence 0,015 m³/s. L'étape E5 a par exemple une durée de l'ordre de 150 secondes.

Une étape E6 consiste à ramener le moteur 10 à son régime de ralenti normal avant d'arrêter l'outil de pilotage 20 du procédé. L'étape E6 a par exemple une durée de l'ordre de 120 secondes

## Revendications

1. Procédé de régénération en mode stationnaire d'un filtre à particules (16) de moteur thermique (10) chargé en suies lors d'une opération de maintenance, ledit moteur thermique (10) étant relié à une ligne d'échappement (12) comportant ledit filtre à particules (16), **caractérisé en ce que** ledit procédé comporte:
- une étape (E1) d'augmentation d'un régime moteur depuis un régime de ralenti vers un régime optimal (R_opt) compris entre 3000 tr/min et 4000 tr/min permettant d'augmenter une température des gaz d'échappement ainsi qu'un débit des gaz d'échappement,
- une étape (E2) de régénération du filtre à particules (16) basée sur une adaptation de paramètres de fonctionnement du moteur thermique (10) de manière à contrôler la température des gaz d'échappement en amont du filtre à particules (16) dans une plage comprise entre 750°C et 800°C et un niveau d'oxygène dans le filtre à particules (16) de l'ordre de 2% pour éviter un emballement d'une combustion des suies,
- une étape (E3) de refroidissement de la ligne d'échappement (12) à la fin de l'étape (E2) de régénération du filtre à particules (16), et
- une étape (E5) de réalisation d'un bilan d'efficacité de la régénération du filtre à particules (16).

2. Procédé selon la revendication 1, **caractérisé en ce que** les paramètres de fonctionnement du moteur thermique (10) adaptés lors de l'étape (E2) de régénération du filtre à particules (16) sont les suivants: une avance à l'allumage qui est fortement retardée dans un cycle moteur pour obtenir la température souhaitée des gaz d'échappement ainsi qu'une consigne de richesse fixée par exemple à une valeur de l'ordre de 0,95 pour obtenir le taux d'oxygène souhaité.

3. Procédé selon la revendication 2, **caractérisé en ce qu'**au moins un paramètre supplémentaire de fonctionnement du moteur thermique (10) adapté lors de l'étape (E2) de régénération du filtre à particules (16) peut être choisi parmi: un ou plusieurs paramètres d'injection, une levée de soupapes et un croisement de soupapes si le moteur thermique (10) est pourvu de système à levée de soupapes variable, de manière à maîtriser notamment une stabilité de combustion du moteur thermique (10).

4. Procédé selon l'une quelconque des revendications 1 à 3, **caractérisé en ce que** l'étape (E5) de réalisation du bilan d'efficacité est effectuée à partir d'une mesure de pression différentielle entre une entrée et une sortie du filtre à particules (16), tout en maintenant un débit des gaz d'échappement permettant de réaliser une telle mesure.

5. Procédé selon l'une quelconque des revendications 1 à 4, **caractérisé en ce qu'**il comporte en outre une étape (E4) d'apprentissage consistant à maintenir un régime moteur permettant d'effectuer un apprentissage d'un estimateur de charge en suies du filtre à particules (16) basé sur une mesure de pression différentielle.

6. Outil de pilotage (20) d'une régénération d'un filtre à particules (16) comportant une mémoire stockant des instructions logicielles pour la mise en œuvre du procédé de régénération du filtre à particules (16) tel que défini selon l'une quelconque des revendications précédentes.

## Patentansprüche

1. Regenerationsverfahren im Standbetrieb eines Partikelfilters (16) einer Wärmekraftmaschine (10), die während eines Wartungsvorgangs mit Ruß beladen ist, wobei die Wärmekraftmaschine (10) mit einem Abgasstrang (12) verbunden ist, der den Partikelfilter (16) umfasst, **dadurch gekennzeichnet, dass** das Verfahren umfasst:
- einen Schritt (E1) zum Erhöhen einer Motordrehzahl von einer Leerlaufdrehzahl auf eine optimale Drehzahl (R_opt), die zwischen 3000 U/min und 4000 U/min umfasst ist, was es ermöglicht, eine Temperatur der Abgase sowie einen Abgasstrom zu erhöhen,
- einen Schritt (E2) zum Regenerieren des Partikelfilters (16) basierend auf dem Anpassen der Betriebsparameter des Verbrennungsmotors (10), um die Temperatur der Abgase stromaufwärts des Partikelfilters (16) in einem Bereich dazwischen zu steuern 750 °C und 800 °C und ein Sauerstoffgehalt im Partikelfilter (16) in der Größenordnung von 2 %, um eine außer Kontrolle geratene Verbrennung von Ruß zu verhindern,
- einen Schritt (E3) zum Kühlen der Abgasleitung (12) am Ende des Schrittes (E2) zum Regenerieren des Partikelfilters (16), und
- einen Schritt (E5) zum Durchführen einer Effizienzbewertung der Regeneration des Partikelfilters (16).

2. Verfahren nach Anspruch 1, **dadurch gekennzeichnet, dass** die während des Schrittes (E2) des Regenerierens des Partikelfilters (16) angepassten Betriebsparameter der Brennkraftmaschine (10) folgende sind: eine stark verzögerte Frühzündung an Motorzyklus, um die gewünschte Temperatur der Abgase zu erhalten, sowie einen Anreicherungssollwert, der beispielsweise auf einen Wert in der Größenordnung von 0,95 festgelegt ist, um den gewünschten Sauerstoffgehalt zu erhalten.

3. Verfahren nach Anspruch 2, **dadurch gekennzeichnet, dass** mindestens ein weiterer während Schritt (E2) des Regenerierens des Partikelfilters (16) angepasster Betriebsparameter der Wärmekraftmaschine (10) auswählbar ist aus : einem oder mehreren Einspritzparametern, a Ventilhub und eine Ventilüberschneidung, wenn der Verbrennungsmotor (10) mit einem variablen Ventilhubsystem versehen ist, um insbesondere eine Verbrennungsstabilität des Motors zu steuern thermisch (10).

4. Verfahren nach einem der Ansprüche 1 bis 3, **dadurch gekennzeichnet, dass** der Schritt (E5) des Durchführens des Wirkungsgradabgleichs aus einer Messung des Differenzdrucks zwischen einem Einlass und einem Auslass des Filters mit Partikeln (16) durchgeführt wird, während eine Strömungsgeschwindigkeit der Abgase aufrechterhalten wird, die es ermöglicht, eine solche Messung durchzuführen.

5. Verfahren nach einem der Ansprüche 1 bis 4, **dadurch gekennzeichnet, dass** es ferner einen Lernschritt (E4) umfasst, der darin besteht, eine Motordrehzahl beizubehalten, die es ermöglicht, ein Lernen eines Beladungsschätzers in Ruß aus dem Partikelfilter durchzuführen (16) basierend auf einer Differenzdruckmessung.

6. Steuerwerkzeug (20) zum Regenerieren eines Partikelfilters (16), umfassend einen Speicher, der Softwareanweisungen zum Implementieren des Prozesses zum Regenerieren des Partikelfilters (16) nach einem der vorhergehenden Ansprüche speichert.

## Claims

1. Regeneration method in stationary mode of a particulate filter (16) of a heat engine (10) loaded with soot during a maintenance operation, said heat engine (10) being connected to an exhaust line (12) comprising said particulate filter (16), **characterized in that** said method comprises :
- a step (E1) of increasing an engine speed from an idle speed to an optimum speed (R_opt) comprised between 3000 rpm and 4000 rpm making it possible to increase a temperature of the exhaust gases as well as an exhaust gas flow,
- a step (E2) for regenerating the particulate filter (16) based on an adaptation of the operating parameters of the heat engine (10) so as to control the temperature of the exhaust gases upstream of the particulate filter (16) in a range of between 750°C and 800°C and an oxygen level in the particulate filter (16) of the order of 2% to prevent runaway combustion of soot,
- a step (E3) of cooling the exhaust line (12) at the end of the step (E2) of regenerating the particulate filter (16), and
- a step (E5) of carrying out an efficiency assessment of the regeneration of the particulate filter (16).

2. Method according to claim 1, **characterized in that** the operating parameters of the internal combustion engine (10) adapted during step (E2) of regenerating the particulate filter (16) are as follows : an ignition advance which is greatly delayed in an engine cycle to obtain the desired temperature of the exhaust gases as well as a richness setpoint fixed for example at a value of the order of 0.95 to obtain the desired oxygen level.

3. Method according to claim 2, **characterized in that** at least one additional operating parameter of the heat engine (10) adapted during step (E2) of regenerating the particulate filter (16) can be chosen from : a or several injection parameters, a valve lift and a valve overlap if the internal combustion engine (10) is provided with a variable valve lift system , so as to control in particular a combustion stability of the engine thermal (10).

4. Method according to any one of claims 1 to 3, **characterized in that** the step (E5) of carrying out the efficiency balance is carried out from a measurement of differential pressure between an inlet and an outlet of the filter with particles (16), while maintaining a flow rate of the exhaust gases making it possible to carry out such a measurement.

5. Method according to any one of claims 1 to 4, **characterized in that** it further comprises a step (E4) of learning consisting in maintaining an engine speed making it possible to carry out a learning of a load estimator in soot from the particulate filter (16) based on a differential pressure measurement.

6. Control tool (20) for regenerating a particulate filter (16) comprising a memory storing software instructions for implementing the process for regenerating the particulate filter (16) as defined according to any of the preceding claims.
